(19) Europäisches Patentamt
European Patent Office
Office européen des brevets

(11) Veröffentlichungsnummer: **0 011 196**
**A1**

# EUROPÄISCHE PATENTANMELDUNG

(21) Anmeldenummer: 79104264.1

(22) Anmeldetag: 02.11.79

(51) Int. Cl.³: **F 16 L 59/14**
**B 28 B 1/52, B 29 C 17/10**

(30) Priorität: 08.11.78 DE 2848391

(43) Veröffentlichungstag der Anmeldung:
28.05.80 Patentblatt 80/11

(84) Benannte Vertragsstaaten:
AT BE CH FR GB IT LU NL SE

(71) Anmelder: **Firma Karl Klein Kunststoff-Fab ik**

**D-7970 Leutkirch 3(DE)**

(72) Erfinder: **Klein, Karl**
**Friesenhofen**
**D-7970 Leutkirch 3(DE)**

(72) Erfinder: **Himmler, Heinrich**
**Friesenhofen**
**D-7970 Leutkirch 3(DE)**

(74) Vertreter: **Hübner, Hans-Jürgen, Dipl.-Ing.**
**Mozartstrasse 21**
**D-8960 Kempten(DE)**

(54) Isolierrohr und Verfahren zu seiner Herstellung.

(57) Ein Isolierrohr (10) Wärmeisolierung von Rohrleitungen besteht aus mehreren Isoliermaterial-Schnichten (16,18), die durch eine Klebstoffschicht (20) miteinander verbunden sind. Jede Isoliermaterialschicht (16,18) besteht aus Fasermaterial, z.B. Steinwolle, Glaswolle und/oder Kunstfasern. Die Fasern jeder Schicht verlaufen angenähert parallel zueinander. Benachbarte Faserschichten (16,18) weisen im Winkel zueinander liegende Faserorientierungen derart auf, daß eine erst Schicht (16) eine parallel zur Rohrlängsrichtung liegende Faserorientierung hat, während in der anschließenden Schicht (18) die Fasern quer dazu, jedoch rechtwinklig zur Richtung der Aufeinanderschichtung verlaufen.

Das Isolierrohr (10) weist einen Längsschlitz (12) auf, der vorzugsweise in Richtung der Aufeinanderschichtung durch die Rohrachse verläuft, eine Rohrwand ganz durchsetzt und in die diametral gegenüberliegende Rohrwand hineinreicht (14).

Die Herstellung des Rohres erfolgt durch Verkleben der Faserplatten (16,18) zu einem Faserblock, aus dem die Rohre mit einem mit hoher Geschwindigkeit bewegten Schneiddraht ausgeschnitten werden.

./...

EP 0 011 196 A1

FIG.1

Die Erfindung betrifft ein Isolierrohr mit einem die Rohrwand durchsetzenden Schlitz zur Wärmeisolierung von Rohrleitungen.

Bekannte Isolierrohr dieser Art bestehen aus Schaumstoff. Das Ausgangsmaterial ist vergleichsweise teuer und brennbar.

Aufgabe der Erfindung ist es, längsgeschlitzte Isolierrohre zur Wärmeisolierung von Rohrleitungen herzustellen, die preiswerter sind, nicht brennbar sind und einen hohen Isolierwert haben.

Diese Aufgabe wird erfindungsgemäß dadurch gelöst, daß sich das Isolierrohr aus mehreren, durch jeweils eine Klebstoffschicht miteinander verbundenen Schichten zusammensetzt, die je aus Mineral- und/oder Kunstfaserplatten mit definierter Faserrichtung bestehen und daß benachbarte Faserplatten in Kreuzversatz miteinander verbunden sind.

Weitere vorteilhafte Merkmale bestehen darin, daß in einer der beiden benachbarten Faserschichten die Fasern im wesentlichen in Rohrlängsrichtung orientiert sind, daß die Klebstoffschicht achsparallel angeordnet ist und daß handelsübliche kompressible Stein- oder Glaswollfaserplatten verwendet werden.

Der Vorteil der Erfindung besteht nicht nur darin, daß preisgünstigere Isolierrohre geschaffen werden, sondern daß diese Isolierrohre auch unbrennbar sind. Die erfindungsgemäßen Rohre haben den weiteren Vorteil, daß sie auch zum Isolieren von Rohrkrümmern benutzt werden können, was bei bisherigen Mineralwollschalen nicht möglich ist. Die geradlinig produzierten Isolierrohre gemäß der Erfindung können aufgrund der Weichheit des Isoliermaterials gebogen, also geformt werden, ohne zu brechen. Das Aufbringen der Isolierrohre auf die Rohrleitungen muß also nicht mehr an den Krümmern unterbrochen werden, sondern kann fortlaufend verfahren. Dank der im Kreuzversatz hinsichtlich der Faserorientierung verklebten Faserplatten wird eine hohe Stabilität bei besonders günstigen Wärmedämmeigenschaften erreicht.

Die Erfindung betrifft weiterhin ein Verfahren zur Herstellung von Isolierrohren und dieses Verfahren ist dadurch gekennzeichnet, daß eine Anzahl Faserplatten im Kreuzversatz miteinander zu einem Faserblock verklebt werden, aus dem in einer Formschneidemaschine die Isolierrohre nacheinander mittels eines in seiner Längsrichtung mit hoher Geschwindigkeit bewegten Schneiddrahtes unter gleichzeitiger Relativbewegung des Faserblockes in zwei zum Schneiddraht und zueinander rechtwinkligen Richtungen ausgeschnitten werden. Der Schneiddraht verläuft in den jeweils benachbarten Schichten abwechselnd parallel zur Faserrichtung und rechtwinklig dazu. In einem Schneidvorgang werden die Außenkontur, der Radialschlitz und die Innenkontur geschnitten. Die beiden rechtwinklig zueinander verlaufenden Bewegungen zur Verlagerung
des Schneiddrahtes sind programmgesteuert. Die Schnittlinien
des Schneiddrahtes an den Außenkonturen benachbarter Isolierrohre können ineinanderlaufen, so daß höchste Materialausnutzung erzielt wird.

Gemäß einer Ausgestaltung werden rechteckige Faserplatten mit
einer gegenüber der Breite doppelten Länge verwendet. Solche
Faserplatten sind beispielsweise als Glaswollplatten oder
Steinwollplatten in verschiedenen Plattenstärken erhältlich.
Der Block wird nun erfindungsgemäß so gebildet, daß zwischen
je zwei handelsüblich zugeschnittene Faserplatten mit parallellaufenden Fasern eine aus zwei Hälften bestehende Faserplatte angeordnet wird, welche einander an ihren in Faserrichtung verlaufenden Längsrändern berühren. Die beiden Hälften sind vorzugsweise miteinander verklebt.

Mit der Erfindung können Isolierrohre kleinster Dimensionen
hergestellt werden, was bisher nicht möglich war. Die Isolierrohre weisen eine sauber geschnittene Kontur auf. Eine Nachbehandlung ist nicht erforderlich.

Anhand der Zeichnung, die ein Ausführungsbeispiel darstellt,
sei die Erfindung näher beschrieben.

Es zeigt:

Fig. 1   eine perspektivische Ansicht eines neuartigen Isolierrohres,

Fig. 2   eine perspektivische Ansicht eines aus einer Anzahl
Faserplatten bestehenden Faserblockes, aus dem die
Isolierrohre ausgeschnitten werden und

Fig. 3   eine perspektivische Ansicht einer Schneidmaschine mit
eingelegtem Faserblock während der Herstellung der
Isolierrohre.

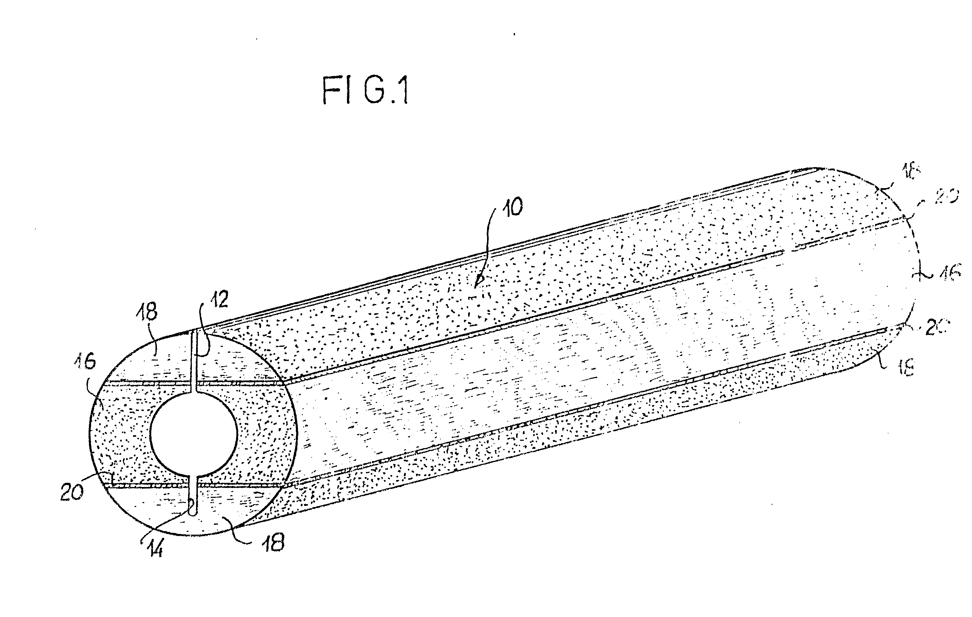

Fig. 1 veranschaulicht schematisch ein Isolierrohr 10, das als
sog. Schale bezeichnet wird, weil es einen im Querschnitt
radial verlaufenden Schlitz 12 aufweist, um das Rohr aufklappen bzw. aufbiegen zu können, wenn es um eine Rohrleitung
herumgelegt werden soll. Herkömmliche Isolierrohre aus
Schaumstoff besitzen einen, dem Schlitz 12 gegenüberliegenden,
jedoch nur über einen Teil der Wandstärke reichenden inneren
Schlitz 14, der das leichtere Aufbiegen begünstigen soll. Ein
solcher Schlitz kann auch bei dem neuartigen Rohr 10 vorgesehen sein, obwohl hier das leichte Aufbiegen auch ohne einen
solchen Schlitz 14 möglich wäre, ohne daß die Gefahr des
Brechens besteht, weil das verwendete Material weicher ist.

Das Rohr 10 wird aus mehreren Schichten gebildet und zwar
einer Schicht 16, in welcher die Fasern in Rohrlängsrichtung
orientiert sind, so daß diese Fasern in der Schicht 16 in dem
in Fig. 1 links dargestellten Radialschnitt etwa rechtwinklig

geschnitten sind. An diese Schicht 16 schließt sich eine Faserschicht 18 an, bei der die Fasern im wesentlichen rechtwinklig zu der Faser der Schicht 16 verlaufen. Die Schichten 16 und 18 sind jeweils durch eine Klebstoffschicht 20 miteinander verbunden.

Obwohl in Fig. 1 eine symmetrische Anordnung der Schichten 18 zur Schicht 16 gezeigt ist, so versteht sich, daß in der Praxis je nach den Dimensionen des Rohres 10 in der Regel eine unsymmetrische Schichtanordnung zur Achsrichtung des Rohres vorhanden sein wird. Da die Rohre aus einem Faserblock hergestellt werden, der aus einer Vielzahl abwechselnder Schichten 16, 18 besteht, könnte es bei besonders dünnen Rohren im Extremfall vorkommen, daß die Rohre gerade so liegen, daß keine Klebstoffschicht 20 enthalten ist, also die fertigen Rohre nur ein Fasersystem enthalten. Dies ist aber die Ausnahme. In der Regel werden die Rohre 10 mindestens eine Klebstoffschicht 20 aufweisen, welche sich parallel zur Längsachse des Rohres erstreckt. Rohre 10 mit größeren Dimensionen haben entsprechend mehr Klebstoffschichten und weisen daher auch mehr als zwei Faserschichten mit jeweils rechtwinklig zueinander laufenden Fasern auf.

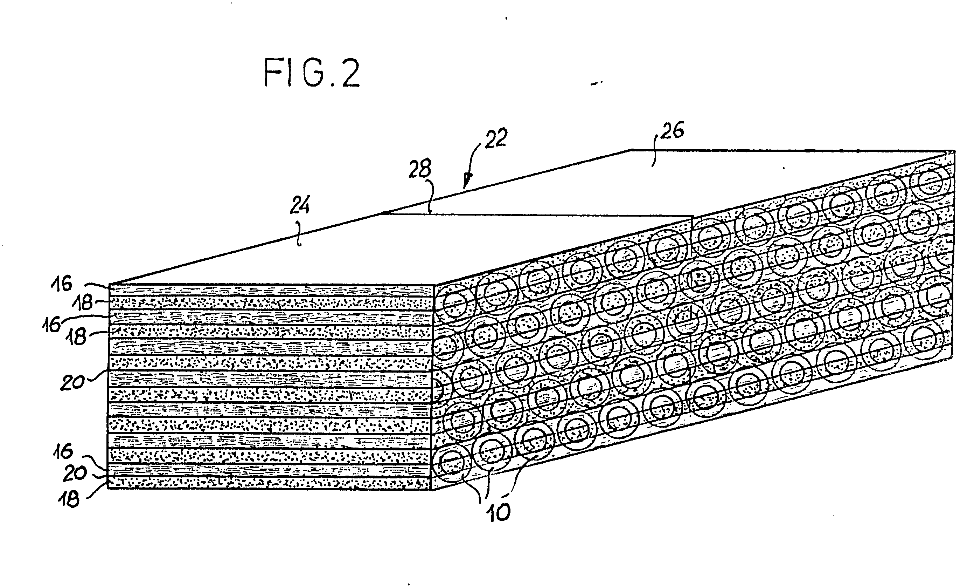

Fig. 2 veranschaulicht einen Faserblock 22, der abwechselnd aus Faserschichten 16 und 18 besteht. Der Faserblock 22 hat eine gegenüber der Breite doppelte Länge. Die Breitseite ergibt die Länge der späteren Isolierrohre. Ein Muster für

die aus dem Block 22 auszuschneidenden Isolierrohre 10 ist an der Längsseitenfläche des Blockes 22 veranschaulicht. Die Isolierrohre 10 werden sich also über die Breitseite des Blockes 22 erstrecken.

Der Block 22 ist nun so gebildet, daß Mineral- oder Glaswollfaserplatten verwendet werden, die dem Format des Blockes 22 entsprechen. D.h., die Faserplatten haben ebenfalls eine gegenüber der Breite doppelte Länge. Dabei verlaufen die Fasern in Längsrichtung dieser Platte, wie in der untersten Platte des Blockes 22 veranschaulicht ist. Die der untersten Platte benachbarte Platte ist mit dieser im Kreuzversatz verklebt. Die Klebstoffschicht ist in Fig. 2 mit 20 bezeichnet. Um diesen Block 22 zu bilden, muß also jede zweite Platte in ihrer Länge halbiert werden, so daß zwei Hälften 24, 26 entstehen, die an den bisherigen Längsrändern 28 miteinander verklebt werden. Diese Kleberänder treten also nur in jeder zweiten Schicht des Blockes auf und zwar in den Schichten 16, in welchen die Fasern in Längsrichtung der späteren Rohre 10, jedoch quer zur Längsrichtung des Blockes 22 verlaufen. Im Block 22 wechseln sich also ungeschnittene Schichten 18 mit jeweils aus zwei Hälften 24, 26 bestehenden Schichten 16 miteinander ab. Alle Schichten sind durch Klebstoffschichten 20 miteinander verklebt, so daß ein kompakter Block 22 gebildet wird.

Wie sich aus Fig. 2 ergibt, besteht die oberste Lage der
später aus dem Block 22 auszuschneidenden Rohr 10 aus zwei
Schichten 16 mit in Längsrichtung der Rohre orientierter
Fasern und zwei Schichten 18, bei denen die Fasern recht winklig
dazu verlaufen. Die erste Lage am Rohren 10 hat also 4 Klebestoffschichten 20. Je nach der gewünschten Dimension der aus
zuschneidenden Rohre können diese aus weniger oder mehr
Schichten bestehen, da auch die Schichtdicke verschieden
gewählt werden kann.

Dank der abwechselnd kreuzweisen Anordnung und Verklebung der
Faserschichten 16 und 18 wird eine mechanisch haltbare Rohrisolierung erzielt, die ein hohes Wärmedämmvermögen hat,
wofür besonders der Kreuzversatz der Schichten maßgeblich ist.

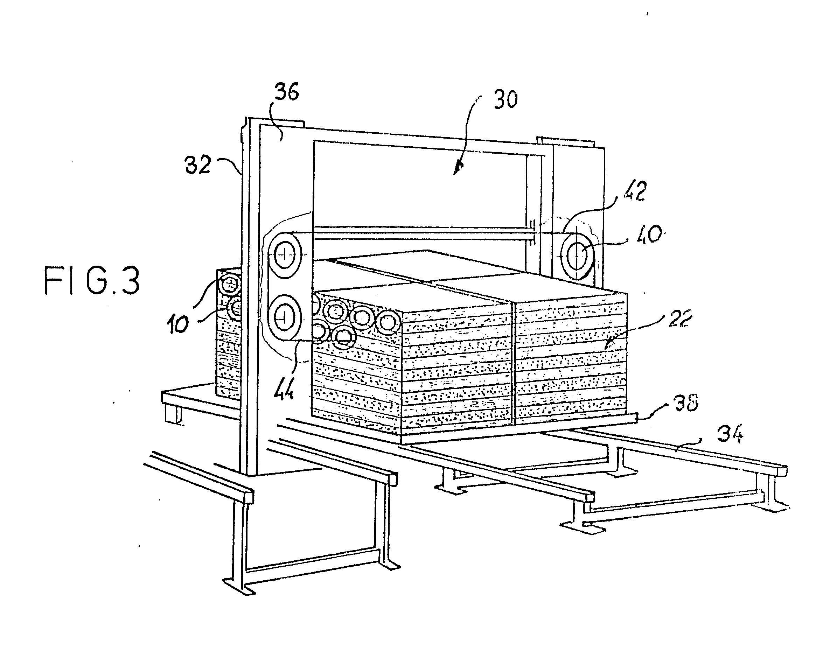

Fig. 3 veranschaulicht eine Formschneidmaschine 30, die aus
einem Rahmen 32, einer Tischführung 34, einem im Rahmen höhenverschiebbar gelagerten Maschinenständer 36 und einem auf der
Tischführung in deren Längsrichtung horizontal verschiebbaren
Maschinentisch 38 besteht. Im Maschinenständer 36, der portalkranartig ausgebildet ist, sind vier Laufrollen 40 angeordnet,
um welche ein Schneiddraht 42 mit aufgezogener Spirale endlos
herumgelegt ist. Der Schneiddraht wird mittels eines nicht
dargestellten Antriebes mit hoher Geschwindigkeit in Längsrichtung des schneidenden Trums 44 angetrieben.

Auf dem Maschinentisch 38 befindet sich der in Fig. 2 gezeigte und schon beschriebene Block 22, der aus einer Anzahl im Kreuzversatz verklebten Faserplatten 16 und 18 besteht. Der Schneiddraht, d.h. das schneidende Trum 44 des Schneiddrahtes, liegt immer längs einer Mantellinie des jeweils zu schneidenden Isolierrohres. Durch gleichzeitige Vertikalbewegung des Maschinenständers 36 und Horizontalbewegung des Maschinentisches 38 wird über eine Programmsteuerung jede beliebige Relativbewegung zwischen Faserblock 22 und schneidendem Trum 44 des Schneiddrahtes ermöglicht, so daß nacheinander die Isolierrohre 10 ausgeschnitten werden können. Dabei läuft der Schneiddraht für jedes Isolierrohr einmal außen herum und einmal innen herum.

Es versteht sich, daß zur Herstellung von Isolierrohren 10 mit anderen Dimensionen dasselbe Ausgangsprodukt, nämlich der Faserblock 22 verwendet werden kann und lediglich die Programmsteuerung für die Bewegungen des Maschinenständers 36 und des Maschinentisches 38 entsprechend geändert werden muß.

Da die Schnitte benachbarter Rohre ineinanderlaufen können, ergibt sich ein minimaler Abfall.

Die nach dem beschriebenen Verfahren hergestellten Isolierrohre sind den bekannten Schaumstoff-Isolierrohren in mehrerer Hinsicht überlegen. Einmal sind sie kostengünstiger. Zum

anderen bestehen sie aus absolut unbrennbarem [...] und [...] Steinwolle, als Ausgangsprodukte für die Faserplatten ausgeht und haben ein besonders hohes Wärme-[...]vermögen. Selbstverständlich können die Faserplatten auch aus Kunstfasern bestehen, wie es auch möglich ist, ein Mischfaserprodukt aus Mineral- und Kunstfasern zu verwenden.

Die neuen Isolierrohre können mit einem sehr niedrigen [...]gewicht hergestellt werden um Material zu sparen. Um [...] Rohre mit niedrigem Raumgewicht zusätzlich zu stabilisieren, können diese außen mit Wasserglas, Harnstoffen od. dgl. beschichtet, beispielsweise getaucht oder gespritzt werden.

Für die Verklebung der einzelnen Schichten 16, 18 des Faserblockes 22 eignet sich ebenfalls Wasserglas oder ein handelsüblicher Dispersionskleber.

Patentansprüche

1. Isolierrohr mit einem die Rohrwand durchsetzenden Schlitz zur Wärmeisolierung von Rohrleitungen, dadurch gekennzeichnet, daß sich das Isolierrohr (10) aus mehreren, durch jeweils eine Klebstoffschicht (20) miteinander verbundenen Schichten (16, 18) zusammensetzt, die je aus Mineral- und/oder Kunstfaserplatten mit definierter Faserrichtung bestehen und daß benachbarte Faserplatten im Kreuzversatz miteinander verbunden sind.

2. Isolierrohr nach Anspruch 1, dadurch gekennzeichnet, daß in einer der beiden benachbarten Faserschichten (16, 18) die Fasern im wesentlichen in Längsrichtung des Rohres (10) orientiert sind.

3. Isolierrohr nach Anspruch 1 oder 2, dadurch gekennzeichnet, daß die Klebstoffschicht (20) achsparallel zum Rohr (10) angeordnet ist.

4. Isolierrohr nach einem der Ansprüche 1 - 3, dadurch gekennzeichnet, daß die Faserplatten (16, 18) aus handelsüblichen kompressiblen Steinwoll- oder Glaswollfaserplatten bestehen.

5. Verfahren zur Herstellung eines Isolierrohres nach einem der Ansprüche 1 - 4, dadurch gekennzeichnet, daß eine Anzahl Faserplatten (16, 18) im Kreuzversatz miteinander

zu einem Faserblock (22) verklebt werden, aus dem in einer Formschneidemaschine (30) die Isolierrohre (10) nacheinander mittels eines in seiner Längsrichtung mit hoher Geschwindigkeit bewegten Schneiddrahtes (42, 44) unter gleichzeitiger Relativbewegung des Faserblockes (22) in zwei zum Schneiddraht und zueinander rechtwinkligen Richtungen ausgeschnitten werden.

6. Verfahren nach Anspruch 5, dadurch gekennzeichnet, daß rechtwinklige Faserplatten (16, 18) mit einer gegenüber der Breite doppelten Länge verwendet werden und daß der Faserblock (22) gebildet wird, indem zwischen je zwei Faserplatten (18) eine aus zwei Hälften (24, 26) bestehende Faserplatte (16) angeordnet wird, welche einander an ihren in Faserrichtung verlaufenden Längsrändern (28) berühren.

7. Verfahren nach Anspruch 6, dadurch gekennzeichnet, daß die beiden Hälften (24, 26) an den Rändern (28) miteinander verklebt werden.

8. Verfahren nach einem der Ansprüche 5 - 7, dadurch gekennzeichnet, daß die Faserisolierrohre (10) außenseitig mit einer Stabilisierungsschicht aus Wasserglas, Harnstoffen od. dgl. versehen werden.

FIG.1

# FIG.2

FIG.3

0011196
Nummer der Anmeldung
EP 79104264.1

# EUROPÄISCHER RECHERCHENBERICHT

**Europäisches Patentamt**

| | EINSCHLAGIGE DOKUMENTE | | | KLASSIFIKATION DER ANMELDUNG (Int.Cl.) 3 |
|---|---|---|---|---|
| Kategorie | Kennzeichnung des Dokuments mit Angabe, soweit erforderlich, der maßgebenden Teile | | betrifft Anspruch | F 16 L 59/14 |
| | ... - A - 313 123 (ROCKWOOL) | | 5,6,7 | B 28 B 1/52 |
| | + Figur 1 + | | | B 29 C 17/10 |
| | -- | | | |
| | DE - A - 481 344 (N.V. NEDER- LANDSE) | | 1,4 | |
| | + Gesamt + | | | |
| | -- | | | |
| | DE - A - 2 132 843 (GEBRÜDER ADOLF) | | 1,5 | RECHERCHIERTE SACHGEBIETE (Int.Cl.) 3 |
| | + Gesamt + | | | |
| | -- | | | F 16 L 59/00 |
| | DE - A1 - 2 357 327 (ADAM) | | 1 | B 28 B 1/00 |
| | + Gesamt + | | | B 28 B 11/00 |
| | -- | | | B 28 B 21/00 |
| | DE - A - 2 022 381 (MESSER) | | 8 | B 29 C 17/00 |
| | + Anspruch 4 + | | | |
| | -- | | | |
| A | DE - A1 - 2 800 792 (P.H. THERMAL) | | 1 | |
| | + Fig.1 + | | | |
| | -- | | | |
| A | DE - A - 2 014 555 (P.H. THERMAL) | | 1 | KATEGORIE DER GENANNTEN DOKUMENTE |
| | + Gesamt + | | | X: von besonderer Bedeutung |
| | -- | | | A: technologischer Hintergrund |
| A | CH - A - 484 738 (ARTHUR MEIER) | | 5 | O: nichtschriftliche Offenbarung |
| | + Gesamt + | | | P: Zwischenliteratur |
| | ---- | | | T: der Erfindung zugrunde liegende Theorien oder Grundsätze |
| | | | | E: kollidierende Anmeldung |
| | | | | D: in der Anmeldung angeführtes Dokument |
| | | | | L: aus andern Gründen angeführtes Dokument |
| X | Der vorliegende Recherchenbericht wurde für alle Patentansprüche erstellt. | | | &: Mitglied der gleichen Patent- familie, übereinstimmendes Dokument |

| Recherchenort | Abschlußdatum der Recherche | Prüfer |
|---|---|---|
| WIEN | 22-01-1980 | SCHUGANICH |

EPA form 1503.1 06.78